# EUROPEAN PATENT APPLICATION

(11) **EP 3 389 264 A1**
(43) Date of publication of application: **17.10.2018**
(21) Application number: 18165926.9
(22) Date of filing: 05.04.2018
(51) Int. Cl.: H04N 7/18

(54) **APARTMENT BUILDING NETWORK SYSTEM**

(30) Priority: 10.04.2017 IT 201700039549
(71) Applicant: Olivieri, Paola, 16154 Genova (FE) (IT); Palombo, Alessandro, 16154 Genova (GE) (IT); Luxardo, Mario, 16158 Genova (GE) (IT)
(72) Inventor: Olivieri, Paola, 16154 Genova (FE) (IT); Palombo, Alessandro, 16154 Genova (GE) (IT); Luxardo, Mario, 16158 Genova (GE) (IT)
(74) Representative: Ripamonti, Enrico

(57) **Abstract**

An apartment building network system is described (1) comprising: :
- a server (2) on which at least one management-administration software is installed which can be accessed by an apartment building manager (100) by means of a computer (200) connected to the server (2) and via an access area reserved for the apartment building managers,
- a first device (3) which can be installed inside an apartment building entrance hall (300), said first device (3) being adapted to allow the apartment building manager (100) to publish in real time documents of interest to the apartment building residents (101) via the management-administration software, so that said documents can be consulted by the residents (101) as they pass through the apartment building entrance hall,
said first device (3) being furthermore configured to allow the residents (101) to access a section of the management-administration software, reserved for each of the residents, via recognition means, in order to:
- enter and/or modify their personal data to customize the services used, for the collection of advertising leaflets or distribution of coupons,
- view documents produced by the apartment building manager (100) referring to the individual resident (101) who has accessed the system,
- send a text message to the apartment building manager (100) by means of a keypad with which the first device (3) is provided,
- check their consumption by collecting the readings of the thermostatic valves with statistical graph in relation to the weather recordings for the period and other operations of the management-administration software,
- by means of a smart phone, download documents or pay the apartment building service charges by means of a technology that uses short range wireless connection. (Fig. 1).

## Description

The invention concerns an apartment building network system.

Currently, information is communicated between apartment building managers and residents via post, email or telephone. Often, when the manager has to provide general information to all the apartment building residents, he/she affixes a paper communication on a notice board (or a space provided on the main entrance door for said purpose). In logistical terms, therefore, the apartment building manager has to write, print and then physically affix the message, and this operation, multiplied by all the apartment buildings managed, results in a significant waste of time.

Business software is also known designed to help apartment building managers to solve various problems in the management of apartment buildings. However, this software has been developed only to enable apartment building managers to carry out complete accounting and fiscal management and provide them with a tool for their office activities.

Since the apartment building residents do not have access to the software, it is not possible for the latter to collect information provided by the residents that can be used by the apartment building manager.

From the document US 2013/0300867, a system is known, the main function of which is to provide interactive reception, i.e. receive a visitor to give him/her information or allow him/her to get in touch with one or more users of the building. However, the system is conceived for use within a firm and, although it provides a system of communication between visitors and employees of the firm, it does not adapt well to an apartment building situation, which has very different needs.

The object of the present invention is to provide an integrated innovative system for the management of an apartment building in order to allow rapid communication between the residents and the apartment building manager.

A further object of the present invention is to provide multiple further solutions suitable for an apartment building situation.

A further object of the present invention is to increase the security level of the apartment building.

According to the present invention, said objects are achieved by means of an apartment building network system as claimed in claim 1.

The characteristics and advantages of the present invention will be evident from the detailed description of two practical embodiments thereof, illustrated by way of non-limiting example in the accompanying drawings, in which:
figure 1 shows an apartment building network system, according to the present invention;
figure 2 shows a first embodiment of a part of the system of figure 1;
figure 3 shows a second embodiment of a part of the system of figure 1.

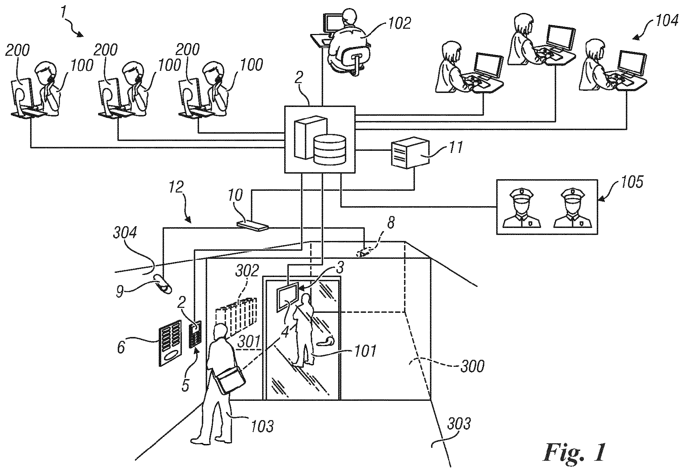

Fig. 1 shows an apartment building network system 1, according to the present invention.

By apartment building network system we mean a set of hardware and software devices connected to one another by appropriate communication channels, which allows the passage of resources from one user to another, information and data that can be published and shared, designed in particular for an apartment building situation. As will be evident from the present description, the system is provided with a series of basic functions but it is open to applications and functions, also proposed by third parties, that develop or suggest solutions suitable for an apartment building situation.

The apartment building network system 1 is configured, managed, updated and monitored by a system administrator 102 who manages, at an infrastructure level, running of the hardware and software of the apartment building network system 1 so that they function correctly, i.e.so that the set of services offered by the apartment building network system 1 can be delivered as efficiently as possible to the users.

The apartment building network system 1 comprises a server 2, on which at least one management software is installed which can be accessed by the apartment building manager 100 by means of at least one computer 200 connected to the server 2 and via an access area reserved for the apartment building manager. For example, the server 2 is a remote server (also called web server or publication server) which can be accessed from any computer connected to the Internet.

The apartment building network system 1, according to the present invention, comprises a first device 3 that can be installed in an apartment building entrance hall 300 and is adapted to allow the apartment building manager 100 to publish in real time documents of common interest to the residents by means of the management software, so that said documents can be consulted by the residents 101 as they pass through the apartment building entrance hall 300.

The first device 3 comprises at least one first screen 4, a keypad and/or other input peripherals (for example, a mouse or a touch pad). In a preferred embodiment, the first device 3 is a computer in which the first screen 4 and the central unit of the computer form a single block (all-in-one computer) and the first screen 4 is a touch screen, which allows the user to interact with a graphic interface by means of his/her fingers or particular objects. For example, the screen can have a dimension of 21 inches.

The first device 3 in the form of an all-in-one computer can be fixed to a wall 301 of the apartment building entrance hall by means of appropriate supports, advantageously adjacent to the letterboxes 302 (Fig. 1). Alternatively, the first device 3 can be integrated in a totem which can consist of a pedestal and a column-shaped body or be mounted on a floor-standing support or on an inclined bracket.

One of the advantages of the first device 3, therefore, is that of acting as an electronic notice board for communications between the apartment building manager 100 and the residents 101.

The apartment building manager 100 can produce documents for the residents 101, for example, by uploading the document into the management software and then, via a simple click from his/her computer 200, display it to the residents 101 via the first device 3 installed in the apartment building entrance hall 300.

The apartment building manager 100 possesses the credentials to publish the information within his/her competence to be brought to the attention of the residents 101, and furthermore has access to all the personal data of the residents 101. The apartment building manager 100 can publish documents of common interest for the residents 101, for example minutes of meetings, statements of account, balance sheet and apartment building rules and regulations, or contingent notices, such as interruption of utilities or services for various reasons, notification of work to be carried out in the building or nearby, common deadlines and convocations of meetings.

Furthermore, the first screen 4 can be divided into areas designed to provide service information such as local and national weather forecast, breaking news and local news, local public transport times, pharmacies open and services of public utility in general.

The first device 3, located in the apartment building entrance hall 300, is an output device and at the same time it is also an input device, adapted to allow the residents 101 to access, via recognition means, a section of the management software reserved for each of the residents.

The residents 101 can access the management system on the condition that they fill in a purposely provided form with their personal data, which allows use of the personal services.

The recognition means of the residents 101 can be a keypad, or in the case of an all-in-one computer, a graphic interface on the first touch screen 4 with a virtual keypad, for entry of an identification number (PIN, Personal Identification Number) of the resident 101. Alternatively, the recognition means can be means for the detection of biometric data of the resident 101, which have the function and purpose of identifying a person on the basis of one or more biological and/or behavioural characteristics (biometry), comparing them with the data, previously acquired and present in a database of the apartment building network system 1, by means of algorithms and acquisition sensors of the input data.

A further example of recognition means could be a machine for reading a badge which is connected to the first device 3, each badge being personal and being issued to each resident 101.

Once the resident 101 has accessed his/her reserved section of the management software, the first device 3 allows display of the documents produced by the apartment building manager 100 referring to the individual resident 101 who has accessed the system. In particular, the reserved area will provide services such as the receipt of individual communications of the apartment building manager 100 relative to the individual property or real estate unit.

The first device 3 also allows the resident 101 who has accessed his/her reserved area to send a text message to the apartment building manager 100 by means of the keypad provided with the computer (in the case of all-in-one computer, by means of the first screen 4, via a graphic interface with virtual keypad). The apartment building manager 100, as said, possesses the credentials to access the management software and view from his/her own computer said messages sent by each of the residents 101.

Furthermore, after accessing his/her own reserved section, the resident 101 can also enter and modify his/her personal data, in order to customize the services used, for the collection of advertising leaflets, or distribution of coupons, check his/her energy consumption by collecting the readings of the thermostatic valves with statistical graph in relation to the weather data for the period and other operations on the management software. For example, after agreement with the supplier firms, the resident 101 can enter consumption data for the individual gas and water utilities.

The first device 3 can be provided with a RFID (radio-frequency identification) reader. Thanks to the RFID reader and the NFC (Near Field Communication) characteristics, a technology that uses a short range wireless connection, now implemented in many latest generation smart phones, the residents 101 can also, by means of a smart phone, download documents or pay the apartment building service charges, said technology allowing data exchange in wireless mode.

Using the same mode of access as described above, also the suppliers can access a section of the management software reserved for them, for example by means of a badge provided by the management. In this way, after accessing the system, the suppliers can, for example, send the data relative to the services provided with automatic generation of the invoice and loading the invoice into the book of original entry, saving on costs and organizational resources for communication and loading of the apartment building service charges. The suppliers can also document their presence and the duration thereof for maintenance or work in the apartment building.

Another function of the first device 3 is the mirror function, via which the first screen 4 can be directly connected with a compatible smart phone (e.g. a smart phone or a PC); in this way, the device display screen can be reproduced on the first screen 4.

Advantageously, the first device 3 has an integrated camera for video surveillance purposes and a movement sensor which activates the screen 4 when the presence of a person is perceived, allowing energy saving when no resident 101 is in the vicinity of the first device 3.

Therefore, the apartment building network system 1 allows all the residents 101 to consult the documents produced by the apartment building manager 100 on the first device 3, which acts as an electronic notice board. Different degrees of freedom of use can also be defined for each of the residents 101. For example, the owner residents can use all the functions of the apartment building network system 1, whereas the non-owner residents can only have access to the messaging on the first device 3. Lastly, non-resident owners can access the management software via remote access to the server 2, through a dedicated web page, by means of a computer or a smart phone.

The apartment building network system 1, according to the present invention, further comprises a second device 5 installed outside the entrance 303 of the apartment building. The second device 5 is designed to allow a visitor 103, if the resident desired does not answer the intercom 6, to type in a text message, or record an audio or video message to be delivered to the resident desired, or contact the resident desired on his/her smart phone. In the latter case, for reasons of privacy, the apartment building network system 1 can ensure that the smart phone number of the resident desired, remains secret.

Each of the residents 101 can configure the second device 5 again by accessing their reserved area of the management-administration software.

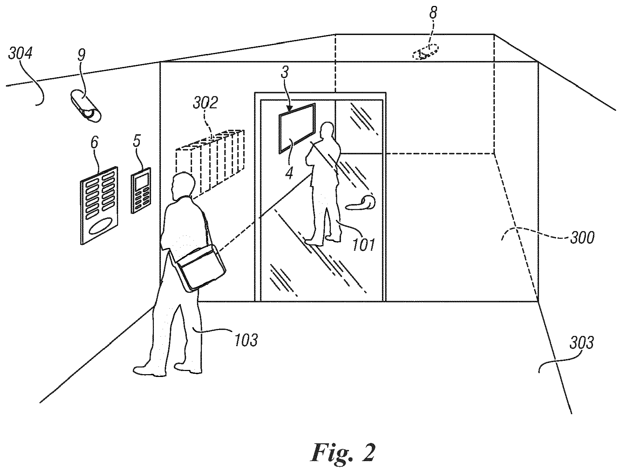

The second device 5 can also be an all-in-one computer fixed to an outer wall 304 of the apartment building by means of appropriate supports, advantageously, as said, in the vicinity of the intercom 6 (Fig. 1, 2). The second device 5 comprises a second screen 7 of the touch screen type, which allows the user to interact with a graphic interface by means of his/her fingers or particular objects. For example, the second screen 7 can have dimensions of 21 inches.

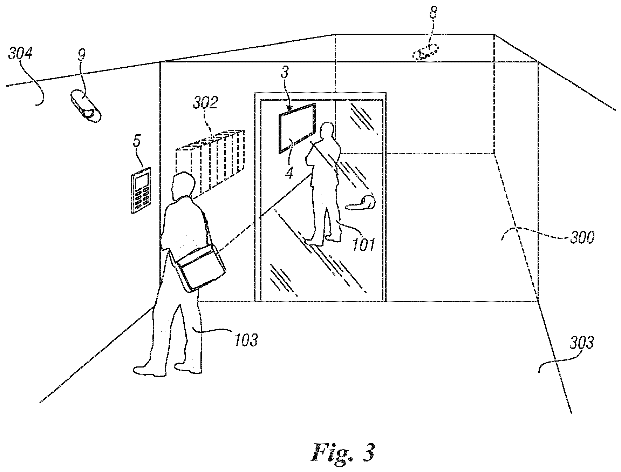

Alternatively, the second device 5 can act as an intercom 6 (Fig. 3). In this case the second screen 7, through an appropriate graphic interface, replaces the push-button panel and allows the visitor 103 to call the resident desired on the intercom.

Therefore, the second device 5 implements functions making it similar to a sort of virtual porter's lodge.

Furthermore, the second device 5 comprises recognition means for recognizing the residents 101 similar to those provided in said first device 3 (graphic interface, means for detection of biometric data, badge), said recognition means being designed to identify the resident 101 to allow the automatic opening of main entrance doors, access barriers or access points to the communal areas without using keys for unlocking (keyless remote access system).

The second device 5 can be configured by the residents 101 by accessing said section of the management- administration software reserved for each of the residents via a computer or a smart phone, in order to select one of the following options:
- enable/disable the possibility of receiving voice or video calls by the visitors 103,
- enable/disable display of the visitor 103 on the smart phone by means of a webcam integrated in the second device 5 at the moment when the visitor 103 contacts the resident,
- enable/disable receipt of notifications of voice calls, video calls or messages received and listen to them or view them in deferred mode.

Preferably, but not exclusively, the apartment building network system 1 further comprises at least one 3G/4G Wi-fi router with data SIM for connection of the first and second device 3, 5 with the server 2.

The apartment building network system 1 further comprises a video surveillance system 12 in turn comprising at least one first camera 8 for internal surveillance, installed inside the apartment building entrance hall 300, and at least one second camera 9 for external surveillance, installed in the vicinity of the apartment building entrance 303, the first and the second camera 8, 9 being connected to a video recorder 10 for recording on a physical support what is filmed by the cameras. The video recorder 10 is a local video recorder installed in the apartment building which is in turn connected to a remote video recorder 11 connected to the server 2 and also forming part of the video surveillance system 12.

The video surveillance system 12 can be managed in outsourcing by surveillance and security services 105 which, after accessing a specific reserved section of the management-administration software, can view everything filmed by the cameras 8, 9 and recorded on the local video recorder 10 and remote video recorder 11 of the apartment building network system 1.

Due to the latter function of the apartment building network system 1, the video surveillance is no longer passive but dynamic and active.

Lastly, the apartment building network system 1 can also comprises at least one gas or fire detection device (not shown in the figures) which can be installed in one of the apartment building spaces. Said at least one gas or fire detection device is connected to the server 2, and therefore to the management-administration software, the latter being configured to send an alarm notification both to the apartment building manager 100 and to the residents 101, in the event of the device detecting a gas leak or a fire.

By its very nature, the apartment building network system 1 is open, and therefore can be adapted over time to new requirements that may occur or to the implementation of additional functions which are expedient or necessary. For example, advertising spaces may be present according to the specific user target. In this context, advertising agencies 104, in their general or local campaigns, can also access the apartment building network system 1 and assign advertisements, selecting the recipients according to uniform social, anagraphical or territorial characteristics.

In the light of the above, it appears evident that the apartment building network system 1 according to the present invention allows the management of apartment buildings in order to permit rapid two-way communication between the residents and the apartment building manager.

The apartment building network system 1 is provided with many further basic functions but is open to applications and functions, also proposed by third parties, that develop or suggest solutions suitable for apartment building situations.

Furthermore, the apartment building network system 1 increases the security level of the apartment building.

The apartment building network system 1 is subject to modifications and variations, all falling within the inventive concept expressed in the attached claims. All the elements described can be replaced by technically equivalent elements.

## Claims

1. An apartment building network system (1) **characterized in that** it comprises:
- a server (2) on which at least one management-administration software is installed which can be accessed by an apartment building manager (100) by means of a computer (200) connected to the server (2) and via an access area reserved for the apartment building managers,
- a first device (3) which can be installed inside an apartment building entrance hall (300), said first device (3) being adapted to allow the apartment building manager (100) to publish in real time documents of common interest to the apartment building residents (101) via the management-administration software, so that said documents can be consulted by the residents (101) as they pass through the apartment building entrance hall,
said first device (3) being furthermore configured to allow the residents (101) to access a section of the management-administration software, reserved for each of the residents, via recognition means, in order to:
- enter and/or modify their personal data, to customize the services used, for the collection of advertising leaflets or distribution of coupons,
- display documents produced by the apartment building manager (100) referring to the individual resident (101) who has accessed the system,
- send a text message to the apartment building manager (100) by means of a keypad with which the first device (3) is provided,
- check their consumption by collecting the readings of the thermostatic valves with statistical graph in relation to the weather recordings for the period and other operations of the management-administration software,
- by means of a smart phone, download documents or pay the apartment building service charges by means of a technology that uses short range wireless connection.

2. The apartment building network system (1) according to claim 1, **characterized in that** said first device (3) is a computer in which a screen (4) and the central unit of the computer form one single block, said screen (4) being a touch screen, which allows the user to interact with a graphic interface by means of his/her fingers or particular objects.

3. The apartment building network system (1) according to claim 1, **characterised in that** it allows suppliers to access a section of the management-administration software reserved for them, in order to send data relative to the services rendered with automatic generation of the invoice and loading the invoice into the book of original entry.

4. The apartment building network system (1) according to claim 1, **characterised in that** it comprises a second device (5) installed externally to the apartment building entrance (303) which acts as a virtual porter's lodge and is designed to allow a visitor (103), if the resident desired does not answer the intercom, to type in a text message, or record an audio or video message to be delivered to the desired resident, or to contact the desired resident on his/her smart phone by means of voice or video call.

5. The apartment building network system (1) according to claim 4, **characterised in that** said second device (5) is an all-in-one computer fixed to an outer wall (304) of the apartment building by means of appropriate supports in the vicinity of an intercom (6) or, alternatively, the second device (5) itself can act as an intercom (6).

6. The apartment building network system (1) according to claims 4 or 5, **characterised in that** said second device (5) comprises recognition means designed to identify the resident (101) in order to allow the automatic opening of main entrance doors, access barriers or access points to the communal areas without using keys for unlocking.

7. The apartment building network system (1) according to claims 4 or 5, **characterised in that** said second device (5) can be configured by the residents (101) by accessing said section of the management-administration software reserved for each of the residents, via a computer or a smart phone, in order to select one of the following options:
- enable/disable the possibility of receiving voice or video calls by visitors (103),
- enable/disable display of the visitor (103) on their smart phone by means of a webcam integrated in the second device (5) at the moment when the visitor (103) contacts the apartment building,
- enable/disable the receipt of notifications of voice calls, video calls or messages received, and listen to them or view them in deferred mode.

8. The apartment building network system (1) according to claims 4 or 5, **characterised in that** said second device (5) is configured so that the residents (101) can leave text or voice messages for postmen, couriers, technicians or other services so that they receive instructions relative to the deliveries to be made.

9. The apartment building network system (1) according to claims 4 or 5, **characterised in that** said second device (5) acts as a virtual professional name-plate, in which information is provided on the utilities, working hours, business carried out, alternative contact numbers and any other information useful for the residents (101) who carry out professional activities.

10. The apartment building network system (1) according to claim 1, **characterised in that** it provides a video surveillance system (12) comprising at least one first camera (8) for internal surveillance, installed inside the apartment building entrance hall (300), and at least one second camera (9) for external surveillance, installed in the vicinity of the apartment building entrance hall, said cameras (8, 9) being connected to a video recorder (10) to record on a physical support what is filmed by the cameras.

11. The apartment building network system (1) according to claim 10, **characterised in that** said video recorder (10) is a local video recorder installed in the apartment building which is in turn connected to a remote video recorder (11) connected to the server (2).

12. The apartment building network system (1) according to claim 10, **characterised in that** said video surveillance system (12) can be managed in outsourcing by surveillance and security services (105) which, after accessing a specific reserved section of the management-administration software, can view everything filmed by the cameras (8, 9) and recorded on the local video recorder (10) and remote video recorder (11) of the system (1).

13. The apartment building network system (1) according to claim 1, **characterised in that** it provides for the arrangement of at least one gas or fire detection device which can be installed in one of the apartment building spaces, said at least one gas or fire detection device being connected to the server (2), and therefore to the management-administrative software, the latter being configured to send an alarm notification both to the apartment building manager (100) and to the residents (101) in the event of the device detecting a gas leak or a fire.
